# EUROPEAN PATENT SPECIFICATION

(11) **EP 0 936 431 B1**
(45) Date of publication and mention of the grant of the patent: **15.05.2002**
(21) Application number: 99101720.3
(22) Date of filing: 10.02.1999
(51) Int. Cl.: F27B 9/26, F27D 3/12, F27D 5/00, F27D 23/00

(54) **Oven particularly for ceramic products**
Brennofen insbesondere für keramische Erzeugnisse
Four en particulier pour des produits céramiques

(30) Priority: 12.02.1998 IT MO980026
(43) Date of publication of application: 18.08.1999
(73) Proprietor: Marcaccioli, Sergio, 41100 Modena (IT)
(72) Inventor: Marcaccioli, Sergio, 41100 Modena (IT)
(74) Representative: Modiano, Guido, Dr.-Ing.

(56) References cited:
- EP-A- 0 869 324
- WO-A-97/27440
- DE-C- 3 421 365
- GB-A- 433 497
- GB-A- 488 262
- US-A- 4 300 881
- US-A- 4 462 798

## Description

The present invention relates to an oven particularly for ceramic products.

It is known that many types of oven are used in the art, according to the conditions and reasons for which heating is performed.

Depending on their operation, ovens are termed periodic when, after the transformation of the treated material has been completed, it is necessary to interrupt operation to change the load, and are termed continuous when the loading and unloading of the treated material occur without having to suspend the operation of the oven.

As regards the ceramics sector, for example, kilns are known which are constituted by box-like structures made of refractory material which are closed on three sides and have moving bases on which frames with a plurality of shelves are mounted; the ceramic products to be treated are loaded onto said shelves.

Once the moving bases have been loaded upstream of the kilns, they are arranged so as to close the box-like structures to allow treatment of the loaded products and are then sent to the stations for unloading the treated products, which are located downstream of the kilns.

These kilns are not free from drawbacks, including the fact that they require considerable space upstream and downstream due to the bulk of the moving bases which support the frames with the corresponding and respectively untreated and treated products; that they require downtimes while waiting for the loading and unloading of the moving bases, with a consequent reduction in productivity; and that the heat absorbed by the walls and by the product during the treatment tends to be partly lost during the movement of the moving base, with a consequent waste of energy.

A Kiln in which Kiln cars are guidingly movable is Known from the document WO 97/27440.

The aim of the present invention is to eliminate the above-mentioned drawbacks of conventional ovens, providing an oven particularly for ceramic products which allows to improve energy efficiency by reducing thermal inertia and heat losses, minimizes the dimensions and the space required for the transport of the products entering and leaving said oven, and fully eliminates waiting periods due to the loading and unloading of the ceramic products.

Within the scope of this aim, an object of the present invention is to provide a structure which is simple, relatively easy to provide in practice, safe in use, effective in operation, and having a relatively low cost.

This aim and this object are both achieved by the oven according to the present invention, particularly for ceramic products, which has the features set forth in claim 1.

Further characteristics and advantages of the present invention will become apparent from the detailed description of a preferred but not exclusive embodiment of an oven particularly for ceramic products according to the invention, illustrated only by way of non-limitative example in the accompanying drawings, wherein:
Figure 1 is a schematic and partially sectional front view of an oven particularly for ceramic products according to the invention;
Figure 2 is an enlarged-scale sectional front view of a detail of a trolley of the oven of Figure 1;
Figure 3 is a schematic top view of another embodiment of a ceramic product containment frame of an oven according to the invention;
Figure 4 is a schematic side view of two successive trolleys of the oven according to the invention.

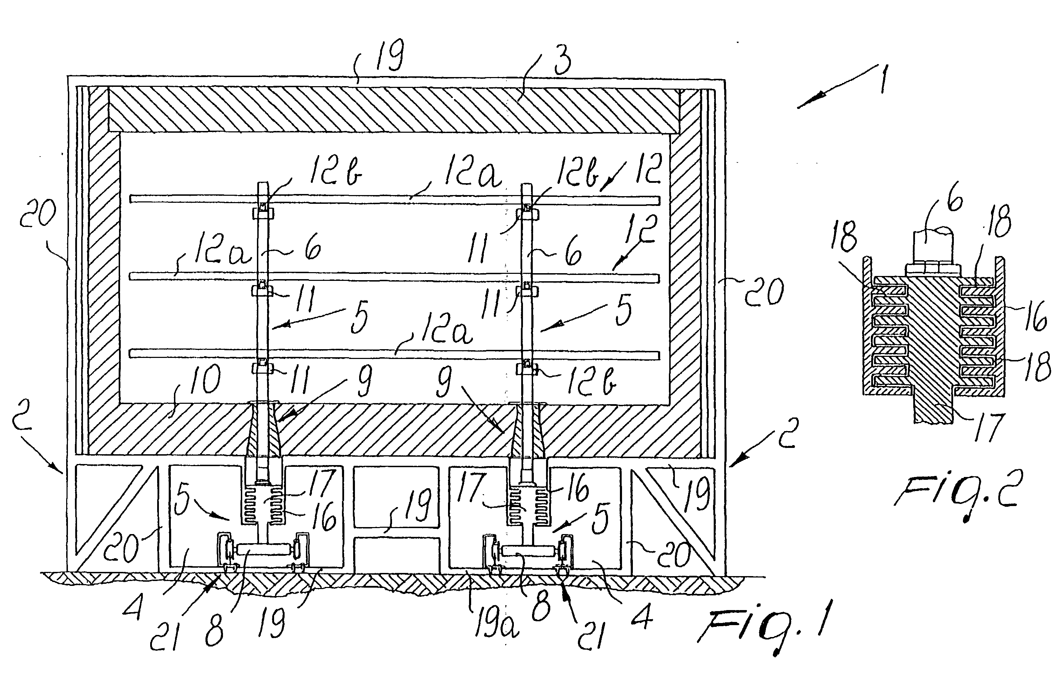

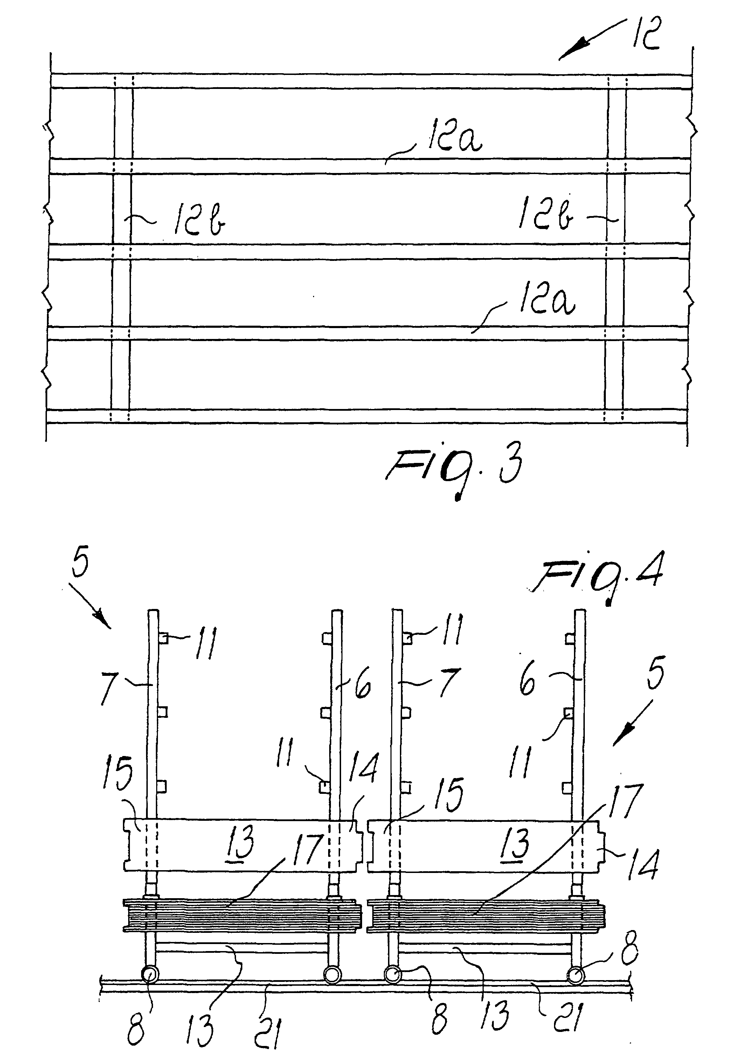

With reference to the above Figures, the reference numeral 1 generally designates an oven particularly for ceramic products according to the invention.

The oven 1 is constituted by a framework 2 for supporting a chamber 3 made of refractory material.

The framework 2 forms two longitudinal and parallel compartments 4 whose dimensions allow the synchronous passage of two mutually laterally adjacent trolleys 5. The trolleys travel together in a longitudinal direction with respect to the oven 1, and belong to corresponding series of trolleys 5 which are mutually aligned and upstream of which there is a pusher which allows the continuous advancement of the pairs of mutually laterally adjacent trolleys.

Each trolley is constituted by a front column 6 and by a rear column 7 which are provided with pairs of wheels 8.

The columns of each trolley 5 pass through respective longitudinal slots 9 which are formed in the base 10 of the chamber 3 and have, at preset levels, a plurality of supporting means constituted by brackets 11.

The brackets 11 of the columns 6 and 7 of a carriage 5 that are arranged at the same level cooperate with the corresponding brackets of the laterally adjacent trolley, so as to support in at least four points a frame 12 on which the ceramic products, not shown, are contained.

As an alternative to the brackets 11, the columns can have supporting means constituted by notches, indents or the like which are adapted to support the corresponding frames 12.

The frames 12 can be large and have a plurality of transverse elements 12a and longitudinal elements 12b which are mutually rigidly coupled and rest on the corresponding brackets 11 of the trolleys 5.

The front column 6 of each trolley 5 is connected to the rear column 7 by means of a longitudinal member 13 whose cross-section is complementary to the cross-section of the slot 9 that it crosses, so as to reduce heat loss toward the outside of the chamber 3.

The front end 14 of the longitudinal member 13 is shaped so as to mate with the rear end 15 of the longitudinal member 13 of the next trolley 5.

Below the chamber 3, at the slots 9 of the base 10, the supporting framework 2 is provided with two longitudinal profiled elements 16, each of which cooperates with a corresponding profiled element 17 which is rigidly coupled to each trolley 5.

The profiled elements 16 and 17 have a substantially comb-like cross-section, so as to provide labyrinth seals 18 which prevent outward dissipation of heat and ensure improved energy efficiency.

The labyrinth seals 18 are in fact pressurized with externally arranged ventilation means and their pressure is regulated by means of pressure transducers as a function of the internal pressure of the oven 1.

The framework 2 comprises a plurality of cross-members 19 and uprights 20, and two pairs of rails 21 are fixed on the cross-members 19a arranged at the base; the pairs of wheels 8 of the trolleys 5 run on said rails.

Conveniently, the rails 21 are of the type with movable anchoring and allow to absorb any movements caused by thermal expansion.

The columns 6 and 7 are mounted so that they can rotate in their respective trolleys 5 and there are rotation means, not shown in the various Figures, which allow a planar rotation of said columns through at least 90 degrees, so as to laterally remove the brackets 11 and allow to lift the various frames 12 and extract them from above.

At the inlet and outlet of the oven 1 there are loading and unloading stations at which said column rotation means are present.

In the loading station, the frames 12 are arranged on the trolleys 5, while in the unloading station the frames 12 are lifted and then picked up by an independent unit which collects them and transfers them all together to the loading/unloading of the ceramic products.

It has thus been observed that the invention achieves the intended aim and object, i.e. provides increased productivity by reducing downtimes, optimizes the space required for the transport, loading and unloading of the ceramic products, and improves the energy efficiency of the oven.

The invention thus conceived is susceptible of numerous modifications and variations, all of which are within the scope of the appended claims.

All the details may furthermore be replaced with other technically equivalent ones.

In practice, the materials used, as well as the shapes and the dimensions, may be any according to the requirements without thereby abandoning the scope of the protection of the claims that follow.

The contents of Italian patent application no. MO98A000026, whose priority is claimed in the present application, are included as reference:

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An oven, particularly for ceramic products, comprising: a chamber made of refractory material (3); at least two trolleys (5); a supporting framework (2) on which said chamber (3) is mounted, said chamber (3) having a base (10) which forms at least two longitudinal parallel guiding slots (9), each said trolley (5) being constituted by a front column (6) and by a rear column (7) provided with pairs of wheels (8), said columns (6, 7) being adapted to pass through said longitudinal slots (9) whereby to allow the synchronous guided passage of said trolleys (5) through said chamber (3); supporting means (11) provided at said columns (6, 7) at preset levels; frames (12) for containing the ceramic products, said supporting means (11) being adapted to cooperate with the supporting means (11) of the columns (6, 7) of the laterally adjacent. trolleys (5) in order to support, at at least four points, said frames (12); and labyrinth seals (18) for preventing heat dissipation outside of said chamber (3), **characterized in that** said supporting framework (2) forms, under said base (10), two longitudinal parallel compartments (4), said labyrinth seals (18) being accommodated in said compartments (4), arranged under said base (10) at said slots (9).

2. The oven according to claim 1, **characterized in that** said supporting means are constituted by brackets (11).

3. The oven according to claim 1, **characterized in that** said front column (6) and said rear column (7) of each trolley (5) are mutually connected by a longitudinal member (13) whose cross-section is complementary to the cross-section of said slot (9).

4. The oven according to claim 3, **characterized in that** the cross-section of said longitudinal member (13) is substantially trapezoidal.

5. The oven according to one or more of the preceding claims, **characterized in that** the front end (14) of said longitudinal member (13) is shaped so as to mate with the rear end (15) of the longitudinal member (13) of the trolley (5) that follows.

6. The oven according to one or more of the preceding claims, **characterized in that** said supporting frame (2) has, below said slots (9) of the base (10) of the chamber (3), two longitudinal profiled elements (16) which have a substantially comb-like cross-section and are adapted to cooperate with corresponding profiled elements (17), which have a substantially comb-like cross-section and are rigidly coupled to the trolleys (5), in order to form said labyrinth seals (18).

7. The oven according to one or more of the preceding claims, **characterized in that** at least two pairs of rails (21) for said trolleys (5) are fixed to the cross-members (19, 19a) of the base of said framework (2).

8. The oven according to one or more of the preceding claims, **characterized in that** said columns (6, 7) are mounted so that they can rotate in the respective trolleys (5) and **in that** rotation means for turning the columns (6, 7) through at least ninety degrees are further provided in order to remove said brackets (11) laterally and to allow lifting of the frames (12) and/or extraction thereof in an upward direction.

9. The oven according to one or more of the preceding claims, **characterized in that** at the inlet and at the outlet of the oven (1) loading and unloading stations are arranged at which said column rotation means are provided.

10. The oven according to claim 1, **characterized in that** said supporting means (11) are constituted by notches, indents or the like.

11. The oven of claims 1 or 6, **characterized in that** said labyrinth seals (18) are pressurized, pressure generation and regulation means being further provided for regulating the pressure at said labyrinth seals as a function of the internal pressure of the oven (1).

12. The oven of claim 11, **characterized in that** said pressure generation and regulation means are constituted by external ventilation means and by pressure transducers.

## Patentansprüche

1. Ofen, insbesondere für keramische Erzeugnisse, mit einer Kammer aus hitzebeständigem Material (3), mit wenigstens zwei Rollwagen (5), mit einem tragenden Rahmenwerk (2), auf das die Kammer (3) montiert ist, wobei die Kammer (3) einen Boden (10) aufweist, der wenigstens zwei längs verlaufende, parallele Führungsschlitze (9) bildet, wobei jeder der Rollwagen (5) aus einer vorderen Säule (6) und einer hinteren Säule (7) gebildet ist, die mit Räderpaaren (8) versehen sind, wobei die Säulen (6, 7) durch die längs verlaufenden Schlitze (9) hindurchführbar sind, um das synchrone, geführte Hindurchführen der Rollwagen (5) durch die Kammer (3) zu ermöglichen, mit Tragemitteln (11), die an den Säulen (6, 7) auf bestimmten Höhen vorgesehen sind, mit Rahmen (12) zur Aufnahme der keramischen Produkte, wobei die Tragemittel (11) dazu ausgebildet sind, mit den Tragemitteln (11) der Säulen (6, 7) der in Querrichtung benachbarten Rollwagen (5) zusammenzuwirken, um die Rahmen (12) an wenigstens vier Punkten zu stützen, und mit Labyrinthdichtungen (18) zum Vermeiden von Wärmeverlust außerhalb der Kammer (3), **dadurch gekennzeichnet, dass** das tragende Rahmenwerk (2) unter dem Boden (10) zwei längs verlaufende, parallele Räume (4) bildet, wobei die Labyrinthdichtungen (18) in den Räumen (4) aufgenommen und unterhalb des Bodens (10) an den Schlitzen (9) angeordnet sind.

2. Ofen nach Anspruch 1, **dadurch gekennzeichnet, dass** die Tragemittel aus Klammern (11) gebildet sind.

3. Ofen nach Anspruch 1, **dadurch gekennzeichnet, dass** die vordere Säule (6) und die hintere Säule (7) jedes Rollwagens (5) gegenseitig mittels eines Längsbauteils (13), dessen Querschnitt komplementär zum Querschnitt des Schlitzes (9) ausgebildet ist, verbunden sind.

4. Ofen nach Anspruch 3, **dadurch gekennzeichnet, dass** der Querschnitt des Längsbauteils (13) im Wesentlichen trapezförmig ist.

5. Ofen nach einem oder mehreren der vorhergehenden Ansprüche, **dadurch gekennzeichnet, dass** das vordere Ende (14) des Längsbauteils (13) derart geformt ist, dass es mit dem hinteren Ende (15) des Längsbauteils (13) des folgenden Rollwagens (5) zusammenpasst.

6. Ofen nach einem oder mehreren der vorhergehenden Ansprüche, **dadurch gekennzeichnet, dass** das tragende Rahmenwerk (2) unterhalb der Schlitze (9) des Bodens (10) der Kammer (3) zwei längs verlaufende Profilelemente (16) aufweist, die einen im Wesentlichen kammartigen Querschnitt aufweisen und mit korrespondierenden Profilelementen (17), die einen im Wesentlichen kammartigen Querschnitt aufweisen und fest mit den Rollwagen (5) verbunden sind, zusammenwirken können, um die Läbyrinthdichtungen (18) zu bilden.

7. Ofen nach einem oder mehreren der vorhergehenden Ansprüche, **dadurch gekennzeichnet, dass** wenigstens zwei Schienenpaare (21) für die Rollwagen (5) an den Querbauteilen (19, 19a) des Bodens des Rahmenwerks (2) befestigt sind.

8. Ofen nach einem oder mehreren der vorhergehenden Ansprüche, **dadurch gekennzeichnet, dass** die Säulen (6, 7) derart montiert sind, dass sie gegenüber den Rollwagen (5) drehbar montiert sind und dass weiterhin Drehmittel zum Drehen der Säulen (6, 7) um wenigstens 90° vorgesehen sind, um die Klammern (11) in Querrichtung zu entfernen und das Anheben der Rahmen (12) und/oder ihr nach oben gerichtetes Entfernen zu ermöglichen.

9. Ofen nach einem oder mehreren der vorhergehenden Ansprüche, **dadurch gekennzeichnet, dass** am Eingang und am Ausgang vom Ofen (1) Belade- und Entladestationen angeordnet sind, an denen die Säulendrehmittel vorgesehen sind.

10. Ofen nach Anspruch 1, **dadurch gekennzeichnet, dass** die Tragemittel (11) aus Nuten, Einkerbungen oder Ähnlichem gebildet sind.

11. Ofen nach Anspruch 1 oder 6, **dadurch gekennzeichnet, dass** die Labyrinthdichtungen (18) mit Druck beaufschlagt sind, wobei Druckerzeugungs- und Regelungsmittel zum Regeln des Drucks an den Labyrinthdichtungen in Abhängigkeit vom Innendruck des Ofens (1) vorgesehen sind.

12. Ofen nach Anspruch 11, **dadurch gekennzeichnet, dass** die Druckerzeugungs- und Regelungsmittel aus externen Belüftungsmitteln und Druckwandlern gebildet sind.

## Revendications

1. Four, en particulier pour des produits céramiques, comprenant : une chambre en matière réfractaire (3) ; au moins deux chariots (5) ; un bâti (2) sur lequel la dite chambre (3) est montée, la dite chambre (3) ayant une base (10) qui comporte au moins deux fentes de guidage longitudinales parallèles (9), chaque dit chariot (5) étant constitué par une colonne avant (6) et par une colonne arrière. (7) pourvues. de. paires de roues (8), les dites cotonnes (6, 7) étant disposées de manière à traverser les dites fentes longitudinales (9) afin de permettre le passage guidé synchrone des dits chariots (5) à travers la dite chambre (3); des moyens de support (11) prévus sur les dites colonnes (6, 7) à des niveaux prédéterminés ; des cadres (12) pour contenir les produits céramiques, les dits moyens de support. (11) étant prévus pour coopérer avec les moyens de support (11) des colonnes (6, 7) des chariots latéralement adjacents (5) afin de supporter, en au moins quatre points, les dits cadres (12) ; et des étanchéités à labyrinthe (18) pour empêcher la dissipation de chaleur à l'extérieur de la dite chambre (3), **caractérisé en ce que** le dit bâti (2) définit, sous la dite base (10), deux compartiments longitudinaux parallèles (4), les dites étanchéités à labyrinthe (18) étant logées dans les dits compartiments (4), prévus sous la dite base (10), à l'endroit des dites fentes (9).

2. Four seton la revendication 1, **caractérisé en ce que** les dits moyens de support sont constitués par des équerres (11).

3. Four selon la revendication 1, **caractérisé en ce que** la dite colonne avant (6) et la dite colonne arrière (7) de chaque chariot (5) sont mutuellement connectées par un élément longitudinal (13) dont la section transversale est complémentaire de la section transversale de la dite fente (9).

4. Four selon la revendication 3, **caractérisé en ce que** la section transversale du dit élément longitudinal (13) est sensiblement trapézoïdale.

5. Four selon une ou plusieurs des revendications précédentes, **caractérisé en ce que** l'extrémité avant (14) du dit élément longitudinal (13) est configurée de manière à s'accoupler avec l'extrémité arrière (15) de l'élément ongitudinal (13) du chariot (5) qui suit.

6. Four selon une ou plusieurs des revendications précédentes, **caractérisé en ce que** le dit bâti (2) comprend, au-dessous des dites fentes (9) de la base (10) de la chambre (3), deux éléments profilés longitudinaux (16) qui ont une section transversale sensiblement en forme de peigne et qui sont agencés de manière à coopérer avec des éléments profilés correspondants (17) qui ont une section transversale sensiblement en forme de peigne et qui sont rigidement couplés aux chariots (5), afin de constituer les dites étanchéités à labyrinthe (18).

7. Four selon une ou plusieurs des revendications précédentes, **caractérisé en ce qu'**au moins deux paires de rails (21) pour les dits chariots (5) sont fixées aux traverses (19, 19a) de la base du dit bâti (2).

8. Four selon une ou plusieurs des revendications précédentes, **caractérisé en ce que** les dites colonnes (6, 7) sont montées de sorte qu'elles peuvent tourner dans les chariots respectifs (5), et **en ce que** des moyens de rotation pour faire tourner les colonnes (6, 7) d'au moins 90 degrés sont en outre. prévus afin. d'enlever les dites équerres (11). latéralement et de permettre un relevage des cadres (12) etlou leur extraction vers le haut.

9. Four selon une ou plusieurs des revendications précédentes, **caractérisé en ce que**, à l'entrée et à la sortie du four (1), il est prévu des stations de chargement et de déchargement à l'endroit desquelles sont placés les dits moyens de rotation de colonnes.

10. Four selon la revendication 1, **caractérisé en ce que** les dits moyens de support (11) sont constitués par des encoches, des crans ou analogues.

11. Four selon les revendications 1 ou 6, **caractérisé en ce que** les dites étanchéités à labyrinthe (18) sont mises en pression, des moyens de génération et de régulation de pression étant en outre prévus pour réguler la pression dans les dites étanchéités à labyrinthe en fonction de la pression intérieure du four (1).

12. Four selon la revendication 11, **caractérisé en ce que** les dits moyens de génération et de régulation de pression sont constitués par des moyens de ventilation extérieurs et par des transducteurs de pression.
